(19) Europäisches Patentamt
European Patent Office
Office européen des brevets

(11) **EP 3 298 377 B1**

(12) **EUROPÄISCHE PATENTSCHRIFT**

(45) Veröffentlichungstag und Bekanntmachung des Hinweises auf die Patenterteilung:
**10.04.2019 Patentblatt 2019/15**

(21) Anmeldenummer: **16745608.6**

(22) Anmeldetag: **19.05.2016**

(51) Int Cl.:
*G01M 7/08* (2006.01)    *G01N 3/30* (2006.01)

(86) Internationale Anmeldenummer:
**PCT/DE2016/000212**

(87) Internationale Veröffentlichungsnummer:
**WO 2016/184449 (24.11.2016 Gazette 2016/47)**

(54) **PRÜFPENDELANORDNUNG SOWIE VERFAHREN ZUM BETRIEB EINER PRÜFPENDELANORDNUNG**

TEST PENDULUM ARRANGEMENT AND METHOD FOR OPERATING A TEST PENDULUM ARRANGEMENT

DISPOSITIF DE PENDULE DE TEST ET PROCÉDÉ DE FONCTIONNEMENT D'UN DISPOSITIF DE PENDULE DE TEST

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2015 DE 102015006594**

(43) Veröffentlichungstag der Anmeldung:
**28.03.2018 Patentblatt 2018/13**

(73) Patentinhaber: **Pfeifer, Gerhard**
**63867 Johannesberg (DE)**

(72) Erfinder: **Pfeifer, Gerhard**
**63867 Johannesberg (DE)**

(74) Vertreter: **Rösler Rasch van der Heide & Partner**
**Bodenseestraße 18**
**81241 München (DE)**

(56) Entgegenhaltungen:
**EP-A2- 2 098 850          CN-U- 202 757 749**
**DE-A1-102011 100 370    FR-A1- 2 839 636**
**JP-A- 2005 017 165        US-A- 5 922 937**
**US-A1- 2005 204 800**

EP 3 298 377 B1

**Beschreibung**

Nachfolgend werden eine Prüfpendelanordnung sowie ein Verfahren zum Betrieb der Prüfpendelanordnung beschrieben. Die Prüfpendelanordnung dient zur Zertifizierung von Crashtest-Dummys und weist eine Prüfsonde auf, die an einer Seilanordnung hängend angeordnet ist.

Crashtest-Dummys werden von der Kraftfahrzeugindustrie verwendet, um die Sicherheit von Kraftfahrzeugen hinsichtlich des Insassenschutzes bei Unfällen zu prüfen. Hierzu werden verschiedene normierte Crashtests durchgeführt, z.B. Frontalcrashs, Seitencrashs, Heckcrashs und Überschlagstests. Die Crashtest-Dummys werden in zu testende Kraftfahrzeuge gesetzt oder anderweitig positioniert und die entsprechenden Crashtests durchgeführt.

Die verwendeten Crashtest-Dummys weisen eine Vielzahl von Sensoren auf, um die Einwirkung des Crashs auf den Crashtest-Dummy messen zu können. Die verwendeten Sensoren sind in vielen Fällen Kraftsensoren, Wegsensoren und Beschleunigungssensoren. Während der Durchführung des Crashtests werden durch diese Sensoren auftretende Beschleunigungen, Eindringungen und Kräfte gemessen und aufgezeichnet. Die Messdaten werden anschließend ausgewertet und die Belastung überprüft.

Die Crashtest-Dummys sollen in ihren Eigenschaften Menschen simulieren. Dies bezieht sich auf Maße, Beweglichkeit, Gewicht und dergleichen. Crashtest-Dummys sind aufgrund dessen schwer zu handhaben.

Ein Crashtest-Dummy regelmäßig zertifiziert werden, um sicherzustellen, dass dieser verlässliche Werte zurückgibt. Die Messkette aus Mechanik Sensorik der Crashtest-Dummys muss zur Zertifizierung überprüft werden. Hierzu sind eine Vielzahl unterschiedlicher Tests vonnöten.

Einige der Tests sehen vor, dass ein Prüfpendel, das eine definierte Masse aufweist und das an einer Seilanordnung definierter Länge aufgehängt ist, aus einer definierten Höhe gegen vorbestimmte Punkte des Crashtest-Dummys geschwungen wird. Solche vorbestimmten Punkte sind beispielsweise an Hüfte, Schultern, Brustbein und Kopf angeordnet. Das Pendel hat beim Aufprall aufgrund der bekannten Masse und der genau definierten Pendelbewegung einen exakt bestimmten Impuls. Diese Präzision wird genutzt, um die Reaktion der Sensoren des Crashtest-Dummys auf den exakt bestimmten Impuls zu prüfen. Sollte ein Sensor einen Wert ausgeben, der nicht innerhalb eines engen Wertekorridors liegt, weist dies auf einen Defekt des Sensors oder der mechanischen Komponenten des Crashtest-Dummys hin und der betreffende Sensor oder die defekten mechanischen Komponenten werden ausgetauscht. Durch die Zertifizierung der Crashtest-Dummys wird sichergestellt, dass das Messsystem Crashtest-Dummy korrekte Werte liefert, mit Hilfe derer die Fahrzeugzulassungsprüfungen durchführbar sind und die zielführende Entwicklung von entsprechenden Rückhaltesystemen ermöglicht.

Übliche Zertifizierungseinrichtungen, die mit den vorbeschriebenen Prüfpendeln arbeiten, sind um das Prüfpendel herum konstruiert. Der Crashtest-Dummy muss, abhängig von dem jeweils durchzuführenden Test, exakt zu einem durch das Prüfpendel bestimmten Referenzpunkt positioniert werden. Bei Räumen mit geringer Deckenhöhe liegt folglich die Höhe des Referenzpunktes ergonomisch ungünstig niedrig. Aufgrund der Eigenschaften der Crashtest-Dummys, der Größe, der beweglichen Gliedmaßen und des hohen Gewichts der meisten Crashtest-Dummys, insbesondere der erwachsenen Crashtest-Dummys, ist diese Arbeit für das die Prüfungen durchführende Personal körperlich sehr anstrengend. Zudem müssen zur Zertifizierung eines einzelnen Crashtest-Dummys mehrere Versuche am Prüfpendel vorgenommen werden, sodass ein Crashtest-Dummy für eine Zertifizierung mehrfach neu positioniert werden muss. Die Positionierung muss sehr präzise zum Referenzpunkt erfolgen. Diese Aufgabe ist zeitaufwendig, sodass nur eine geringe Anzahl von Zertifizierungen pro Tag erledigt werden können. Zudem stehen die Crashtest-Dummys während der Zertifizierung nicht zur Durchführung von Crashtests zur Verfügung. Der Betrieb eines Zertifizierungslabors ist notwendig, aber unwirtschaftlich.

Die JP 2005/017165 A1 offenbart eine Vorrichtung zur Verbesserung der Sicherheit einer Dummytestvorrichtung mit einem Pendel und einer Rotiervorrichtung. Die Rotiervorrichtung weist einen Antrieb, ein Umschaltzahnrad und ein Drehteil mit einem Hebelhebeteil auf. Das Hebelhebelteil hebt das Pendel auf eine vorgeschriebene Höhe. Beim Fallenlassen des Pendels löst sich das Hebelhebeteil instantan vom Pendel vom Umschaltzahnrad.

Die US5922937 offenbart eine ähnliche Vorrichtung.

Die zur Zertifizierung von Crashtest-Dummys notwendigen Prüfeinrichtungen, insbesondere die zu verwendenden Pendel, haben einen hohen Platzbedarf, da die normierte Seillänge groß ist und das Pendel über eine große Höhe ausgelenkt werden muss. Aufbau und Betrieb entsprechender Crashtest-Dummy-Zertifizierungseinrichtungen sind daher mit Komplikationen verbunden. Einerseits müssen Räume mit ausreichenden Abmaßen bereitgestellt werden, andererseits müssen die Einrichtungen im Betrieb gegen Unfälle, vor allem Zusammenstöße mit schwingenden Prüfpendeln, abgesichert werden.

Aufgabe ist es somit, Prüfpendelanordnungen sowie Verfahren zum Betrieb von Prüfpendelanordnungen der eingangs genannten Art dahingehend weiterzubilden, dass der Platzbedarf zum Aufstellen und Betrieb einer entsprechenden Prüfpendelanordnung geringer ausfällt, und dass die Betriebssicherheit entsprechender Prüfpendelanordnungen mit geringerem Aufwand herstellbar ist.

Die Aufgabe wird gelöst durch eine Prüfpendelanordnung gemäß Anspruch 1 sowie durch ein Verfahren zum Betrieb einer Prüfpendelanordnung gemäß dem nebengeordneten Anspruch 12. Weiterführende Ausgestaltungen von Prüfpendelanordnungen sowie dem Verfahren zum Betrieb der Prüfpendelanordnung sind Gegenstand der abhängigen Ansprüche.

Nachfolgend wird eine Prüfpendelanordnung zur Durchführung von Crashtest-Dummy-Zertifizierungen beschrieben, die eine an einer Seilanordnung hängend angeordnete Prüfsonde aufweist. Die Prüfbedingungen zur Durchführung der Crashtest-Dummy-Zertifizierung sind normiert. Die Normierung dient zur Sicherstellung der Einleitung eines präzise definierten Impulses in den Crashtest-Dummy, sodass die von der Sensorik des Crashtest-Dummys aufgenommenen Werte mit einer festgelegten Größe, dem eingeleiteten Impuls, in Bezug gesetzt werden können. Die normierten Prüfbedingungen sehen u. a. eine Seilnormlänge vor. Zusammen mit den ebenso normierten Eigenschaften der Prüfsonde wird somit ein Impuls der Prüfsonde bestimmbar, der innerhalb sehr enger Toleranzen liegt und damit eine Zertifizierung des Crashtest-Dummys erlaubt.

Die Seilanordnung weist eine Aufhängung auf, an der Seile der Seilanordnung oberhalb der Prüfsonde festgelegt sind.

Die Prüfpendelanordnung weist einen ersten Antrieb zur Beschleunigung der Prüfsonde auf, wobei die Aufhängung als Antriebsschlitten ausgebildet ist. Durch die Verwendung eines ersten Antriebs zur Beschleunigung der Prüfsonde wird der notwendige Beschleunigungsweg zum Erreichen einer vorgesehenen Geschwindigkeit der Prüfsonde am Auftreffpunkt des Crashtest-Dummys verkürzt. Dies verringert den Platz, der nötig ist, eine entsprechende Prüfpendelanordnung zu installieren und zu betreiben. Durch den kürzeren Beschleunigungsweg wird zudem eine deutliche Verringerung der Kollisionsgefahr mit Betriebspersonal ermöglicht, da der mögliche Kollisionsraum geringer ist, in dem Prüfsonde und Personal zusammenstoßen können.

Des Weiteren ist wenigstens ein zweiter Antrieb zum Verfahren des oder der Antriebsschlitten zusammen mit der Prüfsonde vorgesehen. Mit Hilfe des wenigstens einen zweiten Antriebs kann die Aufhängung zusammen mit der Prüfsonde bewegt werden. Dadurch kann erreicht werden, dass die Seilanordnung während der Beschleunigung der Prüfsonde stets die gleiche Seilspannung aufweist. Dadurch können Schwingungen des Pendels senkrecht zur gewünschten Bewegungsrichtung vermieden werden. Zudem kann die Prüfsonde auf diese Weise linear beschleunigt werden, da die Distanz zwischen Pendel und Aufhängung konstant gehalten werden kann. Eine Beschleunigung des Pendels auf einer Kreisbahn, wie sie bei einer feststehenden Aufhängung der Seilanordnung erforderlich wäre, kann somit vermieden werden. Eine Beschleunigung auf einer Kreisbahn würde die Ausgestaltung des ersten Antriebs aufwändiger und teurer machen. Mit Hilfe der entsprechenden Prüfpendelanordnung kann der erforderliche Impuls der Prüfsonde auf sehr viel geringerem Raum als bisher mit hoher Präzision und ohne unerwünschte Nebeneffekte, beispielsweise Vibrationen in der Seilanordnung oder dergleichen, erzielt werden.

In einer ersten weiterführenden Ausgestaltung der Prüfpendelanordnung können eine Steuerung bzw. eine Regelung vorgesehen sein, die zur Betätigung des ersten Antriebs und des wenigstens einen zweiten Antriebs dienen. Mit Hilfe einer entsprechenden Steuerung oder einer Regelung können somit der erste Antrieb und der wenigstens eine zweite Antrieb synchronisiert werden. Des Weiteren ist es möglich, unterschiedliche Prüfsonden, die beispielsweise unterschiedliche Massen oder unterschiedliche Konturen haben können, zu verwenden, da mit Hilfe einer Steuerung oder Regelung entsprechende Parameter bei der Ansteuerung der Antriebe berücksichtigt werden können.

Durch die Steuerung wird eine freie Definition des Drehpunktes der Seilaufhängung ermöglicht. Dies erlaubt es des Weiteren, auf eine horizontale Positionierung des Crashtest-Dummys gegenüber einem Referenzpunkt zu verzichten und stattdessen mit den Antrieben den Auftreffpunkt des Dummies anzutasten und steuerungsseitig zu verarbeiten.

Gemäß einem weiteren weiterführenden Aspekt kann die Verbindung zwischen Prüfsonde und Seilanordnung lösbar sein. Hierzu können verschiedene Verschlusssysteme vorgesehen sein, beispielsweise Schnellverschlüsse.

In einer anderen weiterführenden Ausgestaltung können der erste Antrieb und/oder der wenigstens eine zweite Antrieb Linearantriebe sein. Linearantriebe sind sehr leistungsfähig und erlauben Beschleunigung hoher Massen auf kurzen Distanzen. Linearantriebe lassen sich aus diesem Grund des Weiteren sehr schnell abbremsen, was zu einer präzisen Nachbildbarkeit der normierten Prüfbedingungen führt. Durch die Verwendung von Linearantrieben lassen sich die notwendigen Beschleunigungswege weiter reduzieren. Dadurch sinkt der Platzbedarf weiter und das Unfallrisiko wird weiter reduziert.

Die Linearantriebe der Seilaufhängung können insbesondere als eisenlose Linearmotor-Antriebe gestaltet sein, die auf Schienen geführte Schlitten aufweisen. Die Schlitten weisen geringe Massen auf und halten die zu beschleunigenden und abzubremsenden Massen dadurch gering.

Der erste Linearantrieb für die Prüfsonde kann in einer möglichen Ausgestaltung als eisenbehafteter Linearmotor oder als Zahnriemenachse mit Servoantrieb ausgeführt sein. Diese Antriebe sind wesentlich leistungsstärker, jedoch auch weniger dynamisch als eisenlose Linearmotoren. Da ein präziser Stoppunkt für die Prüfsondenbeschleunigung nicht gefordert ist, spielt dieser Umstand keine praktische Rolle.

Alternativ oder zusätzlich zu Linearantrieben können andere Antriebe verwendet werden, z.B. Servoantriebe und/oder Kugelumlaufspindelantriebe.

In einer anderen weiterführenden Ausgestaltung kann vorgesehen sein, dass die Seilanordnung zumindest vier Seile aufweist, an denen die Prüfsonde befestigt ist. Die Seile können in einer Ansicht in Beschleunigungsrichtung der Prüfsonde ein V aufspannen, wodurch eine Zentrierung der Prüfsonde erreicht werden kann und eine Neigung zum seitlichen Schwingen reduzierbar ist.

In einer Ansicht quer zur Beschleunigungsrichtung der Prüfsonde können die Seile parallel sein, wodurch die Prüfsonde auf einer Kreisbahn führbar ist. Der Abstand der Aufhängung quer zur Beschleunigungsrichtung kann dem Abstand der Aufhängungspunkte der Seile an der Prüfsonde entsprechen. Damit ergeben sich als Trajektorien der Seile parallel versetzte Kreisbahnen und eine saubere Führung der Prüfsonde ist möglich.

Für die erste Spur und für die zweite Spur kann jeweils eine Antriebsschiene, insbesondere eine Schiene eines Linearantriebs, vorgesehen sein. Hierdurch wird die Anzahl der notwendigen Antriebe für die Aufhängung reduziert.

Ein weiterführender Aspekt kann vorsehen, dass die Seilanordnung wenigstens sechs Seile aufweist, wobei wenigstens drei Seile in einer ersten Spur und wenigstens drei Seile in einer zweiten Spur angeordnet sind, wobei wenigstens zwei der sechs Seile über Kreuz an der Prüfsonde angeordnet sind.

In manchen Ausgestaltungen können somit vier Seile an einer vorderen Aufhängung oder hinteren Aufhängung der Prüfsonde angeordnet sein. In anderen Ausgestaltungen können acht Seile vorgesehen sein, sodass vier Seile an einer vorderen Aufhängung der Prüfsonde und vier Seile an einer hinteren Aufhängung der Prüfsonde angeordnet sind.

Mithilfe von sechs oder mehr Seilen, von denen wenigstens zwei über Kreuz angeordnet sind, lässt sich ein Rollen der Prüfsonde um ihre Längsachse verhindern.

Ein darüber hinausgehender weiterführender Aspekt sieht vor, dass jedes Seil eine eigene Aufhängung aufweist.

Bei der Verwendung von wenigstens sechs Seilen kann gemäß einer weiteren Ausgestaltung vorgesehen sein, dass wenigstens zwei Seile der ersten Spur und zwei Seile der zweiten Spur an einer gemeinsamen Aufhängung angeordnet sind.

Ein weiterführender Aspekt sieht vor, dass jede Aufhängung über einen eigenen Antriebsschlitten verfügt. Durch Vorsehung eigener Antriebsschlitten für jede Aufhängung können die zu beschleunigenden Massen der Seilaufhängung minimiert werden, was die Präzision des Antriebs erhöht. Weiterhin kann ein variabler Achsabstand der Prüfsonde eingestellt werden und bereits vorhandene Prüfsonden mit unterschiedlichen Abständen können ohne Anpassungen weiterverwendet werden.

Gemäß einer weiterführenden Ausgestaltung können an den Antriebsschienen Stoßdämpfer, insbesondere hydraulische Stoßdämpfer, vorgesehen werden. Die Stoßdämpfer können das Abbremsen der Antriebsschlitten übernehmen, sobald keine weitere Beschleunigung der Prüfsonde mehr erforderlich ist.

In einer Weiterbildung der zuvor genannten Ausgestaltung kann jeder Antriebsschlitten über einen Positionsgeber verfügen, sodass eine Regelung stets eine Rückmeldung über die aktuelle Position jedes Antriebsschlittens hat, wodurch die Präzision der Prüfpendelanordnung im Betrieb weiter erhöhbar ist.

Ein anderer weiterführender Aspekt der Prüfpendelanordnung sieht vor, dass die Seilanordnung eine Seillänge aufweist, die einem Bruchteil der Seilnormlänge entspricht. Der Bruchteil kann ein natürlicher Bruch oder ein nicht natürlicher Bruch sein.

Bei der Verwendung von mehr als vier Seilen bezieht sich die zuvor genannte Seillänge nicht auf über Kreuz geführte Seile.

Durch die Vorsehung wenigstens zweier Antriebe können auch kürzere Seillängen als die Seilnormlänge verwendet werden, was den Platzbedarf zwischen einer Seilaufhängung und Prüfsondenauftreffpunkt am Crashtest-Dummy in vertikaler Richtung reduziert. Die entsprechenden Prüflabore, in denen die hier beschriebene Prüfpendelanordnung verwendbar ist, können somit niedrigere Deckenhöhen haben, als Prüflabore für bekannte Prüfpendelanordnungen, was die Einrichtung entsprechender Zertifizierungslabore erleichtert. Die Prüfsonde kann somit stets in einer ergonomischen Arbeitshöhe angeordnet werden.

Der wenigstens eine zweite Antrieb kann im Rahmen dieser Ausgestaltung so angesteuert werden, dass eine Seilbewegung eines Seils in Normlänge im konkreten Aufhängungspunkt simuliert wird. Diese kann aus der bekannten Geschwindigkeit der Prüfsonde im Auftreffpunkt mit Hilfe des Strahlensatzes leicht ermittelt werden.

In einer anderen weiterführenden Ausgestaltung kann der erste Antrieb eine lösbare Verbindung zur Prüfsonde aufweisen, sodass die Prüfsonde vom ersten Antrieb entkoppelbar ist. Somit kann die Prüfsonde vom ersten Antrieb gelöst werden, bevor sie auf den Crashtest-Dummy auftrifft. Im Moment des Auftreffens schwingt die Prüfsonde somit frei und normgerecht.

In einer weiteren möglichen Ausgestaltung kann eine Seilverbindung zwischen dem ersten Antrieb, insbesondere einem Schlitten und der Prüfsonde vorgesehen sein. Die Länge des Seils ist derart dimensioniert, dass sie mindestens einen ungehinderten ersten Anprall auf den Crashtest-Dummy zulässt, jedoch die Prüfsonde beim Zurückfahren des Antriebsschlittens aufhält. Dies beseitigt eine Gefährdung eines Bedieners durch eine auspendelnde Prüfsonde nach dem Anprall auf den Crashtest-Dummy und verhindert Beschädigungen an der Prüfeinrichtung, wenn ein Test nicht bestimmungsgemäß, z.B. ohne Crashtest-Dummy durchgeführt wird.

Ein erster unabhängiger hier beschriebener Gegenstand betrifft ein Verfahren zum Betrieb einer Prüfpendelanordnung gemäß der zuvor beschriebenen Art. Dabei ist vorgesehen, dass die Prüfsonde mittels des ersten Antriebs und die Aufhängung mittels des wenigstens einen zweiten Antriebs mit je gleichen Beschleunigungen aus dem Ruhezustand heraus beschleunigt werden, wobei die Aufhängung abgebremst wird und wobei die Prüfsonde vom ersten Antrieb entkoppelt wird, sodass die Prüfsonde frei pendelt. Auf diese Weise ist es möglich, die Prüfsonde präzise so zu beschleunigen wie eine klassischen Prüfpendelanordnung, jedoch bei wesentlich geringerem Platzbedarf. Insbesondere bei Verwendung von Linearantrieben können hohe positive wie negative Beschleunigungen erreicht werden, sodass die von der Norm vorgegebenen Toleranzen eingehalten werden können.

Die Koppeleinrichtung kann gemäß einer Ausgestaltung für alle Prüfsonden baugleich sein. Die Koppeleinrichtung kann für bestehende Sonden nachrüstbar sein.

In einer ersten weiterführenden Ausgestaltung des Verfahrens kann die Aufhängung nach der Entkopplung der Prüfsonde mit einer Geschwindigkeit von

$$ v_A = v_P * (1 - \frac{l_P}{l_N}) $$

verfahren werden. Dabei entsprechen $v_A$ der Geschwindigkeit der Aufhängung, $v_P$ der Geschwindigkeit der Prüfsonde im Auftreffpunkt, $l_P$ der tatsächlichen Seillänge und $l_N$ der Seilnormlänge.

Wenn die tatsächliche Seillänge $l_P$ der Seilnormlänge $l_N$ entspricht, ist die Geschwindigkeit des Aufhängungspunktes 0. Bei halber Normseillänge muss die Geschwindigkeit der Aufhängung der halben Geschwindigkeit der Prüfsonde entsprechen. Gemäß einem weiterführenden Aspekt des Verfahrens kann vorgesehen sein, dass der erste Antrieb nach der Entkopplung der Prüfsonde entgegen einer Beschleunigungsrichtung verfahren wird. Hierdurch kann ein Beschädigen der lösbaren Verbindung des ersten Antriebs zur Prüfsonde durch eine zurückschwingende Prüfsonde verhindert werden.

Die vollständige Prüfpendelanordnung kann nach einem ersten Anprall mit dem Crashtest-Dummy auf Abstand zurückgefahren werden, um einen zweiten Anprall auf den üblicherweise umgefallenen Crashtest-Dummy zu verhindern.

Weitere Ziele, Merkmale sowie vorteilhafte Anwendungsmöglichkeiten der Erfindung ergeben sich aus der nachfolgenden Beschreibung eines Ausführungsbeispiels anhand der Zeichnungen. Dabei bilden sämtliche beschriebenen und/oder bildlich dargestellten Merkmale in ihrer sinnvollen Kombination den Gegenstand der vorliegenden Erfindung, auch unabhängig von den Patentansprüchen und deren Rückbezügen. Es zeigen schematisch:

Fig. 1   eine Prüfpendelanordnung gemäß einer ersten Ausführungsform;

Fig. 2   eine herkömmliche Prüfpendelanordnung aus dem Stand der Technik;

Fig. 3   die Prüfpendelanordnung aus Fig. 1 zum Zeitpunkt der Auslösung der Prüfsonde;

Fig. 4   eine zweite Ausführungsform einer Prüfpendelanordnung mit reduzierter Seillänge, sowie

Fig. 5   eine Prüfpendelanordnung gemäß einer dritten Ausführungsform.

Gleiche oder gleichwirkende Bauteile werden in den nachfolgenden Ausführungsbeispielen zur besseren Lesbarkeit mit gleichen Bezugszeichen versehen.

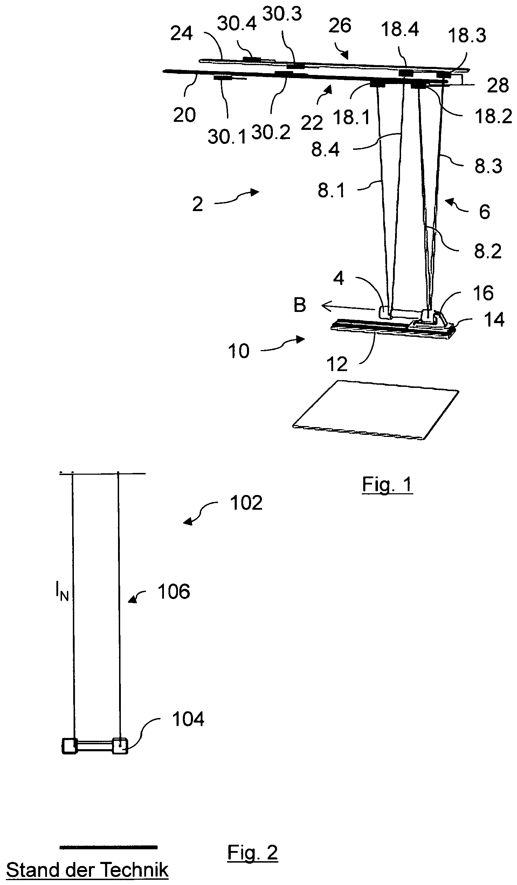

Fig. 1 zeigt eine perspektivische Ansicht einer Prüfpendelanordnung 2 gemäß einer ersten Ausführungsform.

Die Prüfpendelanordnung 2 weist eine Prüfsonde 4 auf, die an einer Seilanordnung 6 festgelegt ist.

Die Seilanordnung 6 weist vier Seile 8.1 bis 8.4 auf. In einer Beschleunigungsrichtung B betrachtet spannen die Seile 8.1 und 8.4 sowie 8.2 und 8.3 jeweils ein V auf. Die Seile 8.1 bis 8.4 sind jeweils an der Prüfsonde 4 festgelegt. Die Seile weisen jeweils eine Normlänge $l_N$ auf.

Die Prüfsonde 4 ist an einem ersten Linearantrieb 10 angeordnet. Der Linearantrieb 10 weist eine Schiene 12 sowie einen auf der Schiene 12 geführten Schlitten 14 auf. An dem Schlitten 14 ist ein Keil 16 angeordnet, der an der Prüfsonde 4 anliegt. Wird der Schlitten 14 in Beschleunigungsrichtung B beschleunigt, wirkt der Keil 16 mit der Prüfsonde 4 und beschleunigt die Prüfsonde 4.

Die Seile 8.1 bis 8.4 sind an ihrem oberen Ende an Aufhängungen festgelegt, die jeweils als Antriebsschlitten 18.1 bis 18.4 ausgebildet sind. Die Antriebsschlitten 18.1, 18.2 laufen auf einer ersten Antriebsschiene 20 eines Linearantriebs 22. Die Antriebsschlitten 18.3, 18.4 laufen auf einer zweiten Antriebsschiene 24 eines Linearantriebs 26. Die Linearantriebe 10, 22 und 26 bzw. die Antriebsschlitten 14 und 18.1 bis 18.4 werden durch eine Regelung 28 gesteuert. Der Regelung 28 werden aktuelle Ortsinformationen der jeweiligen Antriebsschlitten 14 und 18.1 bis 18.4 übermittelt. Hierdurch kann eine exakte Positions-Zeit-Steuerung vorgenommen werden.

In anderen Ausgestaltungen können statt separater Antriebsschlitten ein Antriebsschlitten pro Spur 20, 24 vorgesehen sein.

Das Abbremsen der Antriebsschlitten 18.1 bis 18.4 übernehmen in der dargestellten Ausführungsform hydraulische Stoßdämpfer 30.1 bis 30.4 die an den Antriebsschienen 20, 24 angeordnet sind. Dabei ist jedem Antriebsschlitten 18.1 bis 18.4 je ein eigener Stoßdämpfer 30.1 bis 30.4 zugeordnet.

Die Antriebsschlitten 18.1 bis 18.4 können so ausgebildet und die Stoßdämpfer 30.1 bis 30.4 so angeordnet sein, dass jeweils nur ein Stoßdämpfer 30.1 bis 30.4 mit nur je einem Antriebsschlitten 18.1 bis 18.4 zusammenwirkt. Dies kann beispielsweise über entsprechende Vorsprünge an den Antriebsschlitten 18.1 bis 18.4 realisiert sein.

Fig. 2 zeigt ein Prüfpendelanordnung 102 aus dem Stand der Technik.

Eine Prüfsonde 104 ist an einer Seilanordnung 106 mit Normlänge $L_N$ angeordnet. Die Prüfsonde 104 wird bei gespannten Seilen der Seilanordnung 106 auf eine bestimmte Höhe angehoben und zur Durchführung der Prüfung losgelassen. Durch die Erdanziehungskraft wird die Prüfsonde 104 beschleunigt und erreicht im dargestellten Zeitpunkt, zu dem eine Kollision mit dem zu prüfenden Körper stattfinden soll, seine vorgegebene Geschwindigkeit, die aufgrund der Seillänge und der vorgegebenen Pendelhöhe stets gleich ist.

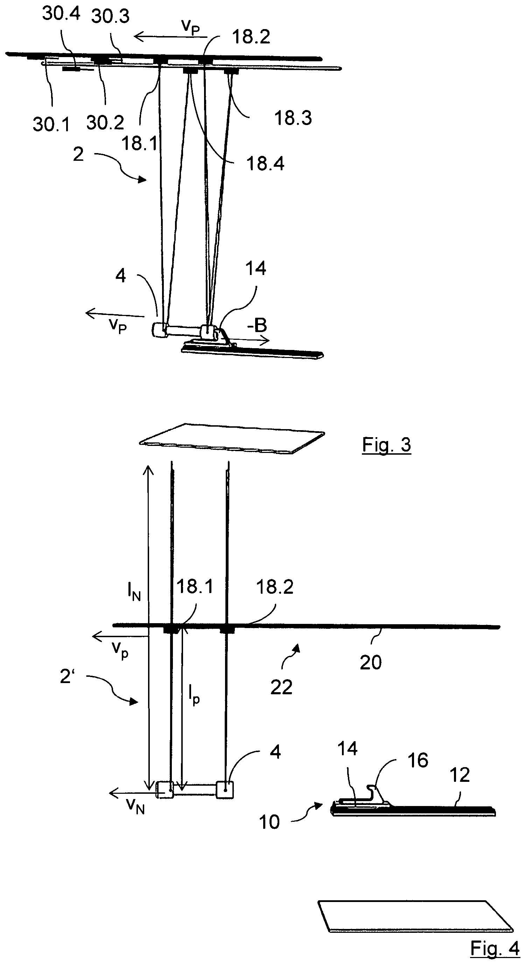

Fig. 3 zeigt die Prüfpendelanordnung 2 aus Fig. 1 zu einem Zeitpunkt nach dem Auslösen.

Im Gegensatz zu Fig. 1 hat sich die Prüfsonde 4 von dem Schlitten 14 gelöst und bewegt sich mit einer Geschwindigkeit $v_P$ nach vorne. Die Antriebsschlitten 18.1 bis 18.4 bewegen sich bis zu einem Auftreffpunkt der Prüfsonde 4 mit gleicher Geschwindigkeit $v_P$ nach vorne. Zum Zeitpunkt des Lösens hat somit die Prüfsonde 4 den gleichen kinetischen Zustand wie die Prüfsonde 104 in Fig. 2. Zum Beschleunigen der Prüfsonde 4 wurde jedoch nur ein Bruchteil des Platzes benötigt, der zum Beschleunigen der Prüfsonde 104 notwendig ist. Der durchschrittene Raum der Prüfsonde 4 ist sehr viel geringer als jener der Prüfsonde 104 aus dem Stand der Technik, sodass eine Kollisionsgefahr der Prüfsonde 4 mit Bedienpersonal reduziert ist.

Der Antriebsschlitten 14 wird entgegen der Beschleunigungsrichtung B, die dem Prüfsondengeschwindigkeitsvektor $v_P$ entspricht, beschleunigt, um einen Zusammenstoß der Prüfsonde 4 nach dem Rückprall von einem Crashtest-Dummy (nicht gezeigt) und dadurch eine Gefahr einer Beschädigung zu entgehen.

Fig. 4 zeigt eine zweite Ausführungsform einer entsprechenden Prüfpendelanordnung 2'.

Die Prüfpendelanordnung 2' weist eine Seillänge $L_P$ auf, die kleiner als die Seilnormlänge $L_N$ der Prüfpendelanordnung 2 aus den Fig. 1 und 2 ist.

Die Aufhängungen bzw. Antriebsschlitten 18.1 bis 18.4 werden im Betrieb der Prüfpendelanordnung 2' nicht auf 0 abgebremst, sondern entsprechend dem Strahlsatz derart, dass sich die Antriebsschlitten 18.1 bis 18.4 so bewegen, wie es ein Seil der Normlänge $l_N$ in der entsprechenden Position tun würde. Die Geschwindigkeit der Antriebsschlitten 18.1 bis 18.4 ergibt sich somit aus

$$V_A = V_P * (1 - \frac{l_P}{l_N})$$

Auf diese Weise können die Bewegungen eines Seils mit Normlänge exakt nachgestellt werden.

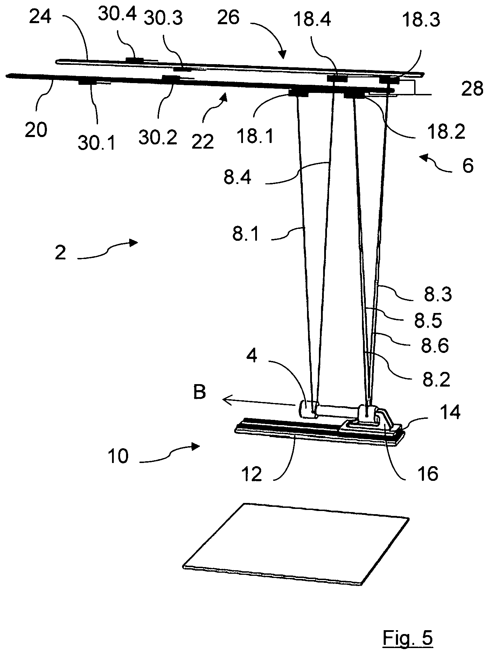

Fig. 5 zeigt eine perspektivische Ansicht einer Prüfpendelanordnung 2'' gemäß einer dritten Ausführungsform.

Die Prüfpendelanordnung 2 weist eine Prüfsonde 4 auf, die an einer Seilanordnung 6 festgelegt ist.

Die Seilanordnung 6 weist vier Seile 8.1 bis 8.4 auf. In einer Beschleunigungsrichtung B betrachtet spannen die Seile 8.1 und 8.4 sowie 8.2 und 8.3 jeweils ein V auf. Die Seile 8.1 bis 8.4 sind jeweils an der Prüfsonde 4 festgelegt. Die Seile weisen jeweils eine Normlänge $l_N$ auf.

Auf der gegen die Beschleuigungsrichtung B abgewandten Seite der Prüfpendelanordnung 2 sind zwei Seile 8.5 und 8.6 über Kreuz an der Prüfsonde 4 festgelegt, sodass in Beschleunigungsrichtung B schauend das Seil 8.5 von links oben nach rechts unten und das Seil 8.6 von rechts oben nach links unten geführt ist. Die Seile 8.5 und 8.6 verhindern ein Rollen des Prüfpendels 2 um die Längsachse, die vorliegend parallel zur Beschleunigungsrichtung B ist.

Die Prüfsonde 4 ist an einem ersten Linearantrieb 10 angeordnet. Der Linearantrieb 10 weist eine Schiene 12 sowie einen auf der Schiene 12 geführten Schlitten 14 auf. An dem Schlitten 14 ist ein Keil 16 angeordnet, der an der Prüfsonde 4 anliegt. Wird der Schlitten 14 in Beschleunigungsrichtung B beschleunigt, wirkt der Keil 16 mit der Prüfsonde 4 und beschleunigt die Prüfsonde 4.

Die Seile 8.1 bis 8.6 sind an ihrem oberen Ende an vier Aufhängungen festgelegt, die jeweils als Antriebsschlitten 18.1 bis 18.4 ausgebildet sind. Dabei sind die Seile 8.2 und 8.5 an dem Antriebsschlitten 18.2 und die Seile 8.3 und 8.6 an dem Antriebsschlitten 18.3 festgelegt. Die Antriebsschlitten 18.1, 18.2 laufen auf einer ersten Antriebsschiene 20 eines Linearantriebs 22. Die Antriebsschlitten 18.3, 18.4 laufen auf einer zweiten Antriebsschiene 24 eines Linearantriebs 26. Die Linearantriebe 10, 22 und 26 bzw. die Antriebsschlitten 14 und 18.1 bis 18.4 werden durch eine Regelung 28 gesteuert. Der Regelung 28 werden aktuelle Ortsinformationen der jeweiligen Antriebsschlitten 14 und 18.1 bis 18.4 übermittelt. Hierdurch kann eine exakte Positions-Zeit-Steuerung vorgenommen werden.

Das Abbremsen der Antriebsschlitten 18.1 bis 18.4 übernehmen in der dargestellten Ausführungsform hydraulische Stoßdämpfer 30.1 bis 30.4, die an den Antriebsschienen 20, 24 angeordnet sind.

Dabei ist jedem Antriebsschlitten 18.1 bis 18.4 je ein eigener Stoßdämpfer 30.1 bis 30.4 zugeordnet.

Die Antriebsschlitten 18.1 bis 18.4 können so ausgebildet und die Stoßdämpfer 30.1 bis 30.4 so angeordnet sein, dass jeweils nur ein Stoßdämpfer 30.1 bis 30.4 mit nur je einem Antriebsschlitten 18.1 bis 18.4 zusammenwirkt. Dies kann beispielsweise über entsprechende Vorsprünge an den Antriebsschlitten 18.1 bis 18.4 realisiert sein.

Bezugszeichenliste

2, 2', 2" Prüfpendelanordnung
4 Prüfsonde
6 Seilanordnung
8.1-8.4 Seile
10 Erster Linearantrieb
12 Schiene
14 Schlitten
16 Keil
18.1-18.4 Antriebsschlitten
20 Erste Antriebsschiene
22 Linearantrieb
24 Zweite Antriebsschiene
26 Linearantrieb
28 Regelung
30.1, 30.2 hydraulischer Stoßdämpfer
102 Prüfpendelanordnung
104 Prüfsonde
106 Seilanordnung
Z Drehzentrum
B Beschleunigungsrichtung
$I_N$ Seilnormlänge
$I_P$ Seillänge
$v_P$ Prüfsondengeschwindigkeit

**Patentansprüche**

1. Prüfpendelanordnung zur Durchführung von Crashtest-Dummy-Zertifizierungen, mit einer Prüfsonde (4), die an einer Seilanordnung (6) hängend angeordnet ist, wobei Prüfbedingungen normiert sind und eine Seilnormlänge ($I_N$) vorgesehen ist, wobei die Seilanordnung (6) eine Aufhängung (18.1, 18.2, 18.3, 18.4) aufweist, wobei ein erster Antrieb (10) zum Beschleunigen der Prüfsonde (4) vorgesehen ist, **dadurch gekennzeichnet dass** die Aufhängung als Antriebsschlitten (18.1, 18.2, 18.3, 18.4) ausgebildet ist, wobei wenigstens ein zweiter Antrieb (22, 26) zum Verfahren des oder der Antriebsschlitten (18.1, 18.2, 18.3, 18.4) zusammen mit der Prüfsonde (4) vorgesehen ist.

2. Prüfpendelanordnung nach Anspruch 1, wobei eine Steuerung oder eine Regelung (28) zur Betätigung des ersten Antriebs (10) und des wenigstens einen zweiten Antriebs (22, 26) vorgesehen ist.

3. Prüfpendelanordnung nach Anspruch 1 oder 2, wobei der erste Antrieb (10) und/oder der wenigstens eine zweite Antrieb (22, 26) Linearantriebe sind.

4. Prüfpendelanordnung nach einem der vorangegangenen Ansprüche, wobei die Seilanordnung (6) wenigstens vier Seile (8.1, 8.2, 8.3, 8.4) aufweist, wobei zwei Seile (8.1, 8.2) in einer ersten Spur (20) und zwei Seile (8.3, 8.4) in einer zweiten Spur (24) angeordnet sind, wobei für die erste Spur und für die zweite Spur je eine Antriebsschiene (20, 24) vorgesehen sind.

5. Prüfpendelanordnung nach Anspruch 4, wobei die Seilanordnung (6) wenigstens sechs Seile (8.1, 8.2, 8.3, 8.4, 8.5, 8.6) aufweist, wobei wenigstens drei (8.1, 8.2, 8.5) Seile in einer ersten Spur (20) und wenigstens drei Seile (8.3, 8.4, 8.6) in einer zweiten Spur (24) angeordnet sind, wobei wenigstens zwei der sechs Seile (8.5, 8.6) über Kreuz an der Prüfsonde (4) angeordnet sind.

6. Prüfpendelanordnung nach Anspruch 4, wobei jedes Seil (8.1, 8.2, 8.3, 8.4) eine eigene Aufhängung aufweist.

7. Prüfpendelanordnung nach Anspruch 5, wobei wenigstens zwei Seile (8.1, 8.5) der ersten Spur (20) und zwei Seile (8.4, 8.6) der zweiten Spur (24) an einer gemeinsamen Aufhängung angeordnet sind.

8. Prüfpendelanordnung nach Anspruch 6 oder 7, wobei jede Aufhängung über einen eigenen Antriebsschlitten (18.1, 18.2, 18.3, 18.4) verfügt.

9. Prüfpendeanordnung nach einem der vorangegangenen Ansprüche, wobei an den Antriebsschienen (20, 24) Stoßdämpfer (30.1, 30.2) angeordnet sind.

10. Prüfpendelanordnung nach einem der vorangegangenen Ansprüche, wobei die Seilanordnung (6) eine Seillänge ($I_P$) aufweist, die einem Bruchteil ($I_P/I_N$) der Seilnormlänge ($I_N$) entspricht.

11. Prüfpendelanordnung nach einem der vorangegangenen Ansprüche, wobei der erste Antrieb (10) eine lösbare Verbindung (14, 16) zur Prüfsonde (4) aufweist, sodass die Prüfsonde (4) vom ersten Antrieb (10) entkoppelbar ist.

12. Verfahren zum Betrieb einer Prüfpendelanordnung (2, 2', 2") nach einem der vorangegangenen Ansprüche, **dadurch gekennzeichnet dass** die Prüfsonde (4) mittels des ersten Antriebs (10) und die Aufhängung (18.1, 18.2, 18.3, 18.4) mittels des wenigstens einen zweiten Antriebs (22, 26) mit je gleichen Beschleunigungen aus dem Ruhezustand heraus beschleunigt werden, wobei die Aufhängung (18.1, 18.2, 18.3, 18.4) abgebremst wird und wobei die Prüfsonde (4) vom ersten Antrieb (10) entkoppelt wird, sodass die Prüfsonde (4) frei schwingt.

13. Verfahren nach Anspruch 12, wobei die Aufhängung (18.1, 18.2, 18.3, 18.4) nach der Entkopplung der Prüfsonde (4) mit einer Geschwindigkeit von

$$V_A = V_P * (1 - \frac{l_P}{l_N})$$

verfahren wird.

14. Verfahren nach Anspruch 12 oder 13, wobei der erste Antrieb (10) nach der Entkopplung der Prüfsonde (4) entgegen einer Beschleunigungsrichtung (B) verfahren wird.


**Claims**

1. Test pendulum arrangement for carrying out crash-dummy certifications with a test probe (4), which is arranged in a hanging manner on a cable arrangement (6), wherein test conditions are standardized and a standard cable length ($l_N$) is provided, wherein the cable arrangement (6) comprises a suspension (18.1, 18.2, 18.3, 18.4), wherein a first drive (10) is provided to accelerate the test probe (4), **characterized in that** the suspension is designed as slides (18.1, 18.2, 18.3, 18.4), wherein at least a second drive (22, 26) is provided to move the drive slide(s) (18.1, 18.2, 18.3, 18.4) together with the test probe (4).

2. Test pendulum arrangement according to Claim 1, wherein a control or regulation system (28) is provided to activate the first drive (10) and to activate the at least one second drive (22, 26).

3. Test pendulum arrangement according to Claim 1 or 2, wherein the first drive (10) and/or the at least one second drive (22, 26) are linear drives.

4. Test pendulum arrangement according to any one of the preceding claims, wherein the cable arrangement (6) comprises at least four cables (8.1, 8.2, 8.3, 8.4), wherein two cables (8.1, 8.2) are arranged in a first track (20) and two cables (8.3, 8.4) are arranged in a second track (24), wherein a drive rail (20, 24) is respectively provided for the first track and for the second track.

5. Test pendulum arrangement according to Claim 4, wherein the cable arrangement (6) comprises at least six cables (8.1, 8.2, 8.3, 8.4, 8.5, 8.6), wherein at least three cables (8.1, 8.2, 8.5) are arranged in a first track (20) and at least three cables (8.3, 8.4, 8.6) are arranged in a second track (24), wherein at least two of the six cables (8.5, 8.6) are arranged crosswise on the test probe (4).

6. Test pendulum arrangement according to Claim 4, wherein each cable (8.1, 8.2, 8.3, 8.4) comprises its own suspension.

7. Test pendulum arrangement according to Claim 5, wherein at least two cables (8.1, 8.5) of the first track (20) and two cables (8.4, 8.6) of the second track (24) are arranged on a joint suspension.

8. Test pendulum arrangement according to Claim 6 or 7, wherein each suspension has its own drive slide (18.1, 18.2, 18.3, 18.4).

9. Test pendulum arrangement according to any one of the preceding claims, wherein shock absorbers (30.1, 30.2) are arranged on the drive rails (20, 24).

10. Test pendulum arrangement according to any one of the preceding claims, wherein the cable arrangement (6) has a cable length ($l_p$), which corresponds to a fraction ($l_P/l_N$) of the standard cable length ($l_N$).

11. Test pendulum arrangement according to any one of the preceding claims, wherein the first drive (10) comprises a detachable connection (14, 16) to the test probe (4) so that the test probe (4) can be decoupled from the first drive (10).

12. Method for operating a test pendulum arrangement (2, 2', 2'') according to any one of the preceding claims, **characterized in that** the test probe (4) is accelerated by means of the first drive (10) and the suspension (18.1, 18.2, 18.3, 18.4) is accelerated by means of the at least one second drive (22, 26) out of the resting state with the same accelerations respectively, wherein the suspension (18.1, 18.2, 18.3, 18.4) is braked and wherein the test probe (4) is decoupled from the first drive (10) so that the test probe (4) swings freely.

13. Method according to Claim 12, wherein, after the decoupling of the test probe (4), the suspension (18.1, 18.2, 18.3, 18.4) is moved with a speed of

$$V_A = V_P * (1 - \frac{l_P}{l_N})$$ .

14. Method according to Claim 12 or 13, wherein the first drive (10) is moved against an acceleration direction (B) after decoupling the test probe (4).


**Revendications**

1. Dispositif de pendule de test pour exécuter des certifications de dispositifs anthropomorphes d'essai (DAE) (ou « mannequins d'essai de choc »), avec une sonde d'essai (4), qui est disposée suspendue sur un système de câbles (6), les conditions d'essai étant normalisées et une longueur normalisée de câble ($I_N$) étant prévue, le système de câbles (6) comportant une suspension (18.1, 18.2, 18.3, 18.4), un premier entraînement (10) étant prévu pour les accélérations de la sonde d'essai (4), *caractérisé en ce que* la suspension est constituée comme un chariot d'entraînement (18.1, 18.2, 18.3, 18.4), au moins un deuxième entraînement (22,26) étant prévu pour déplacer le ou les chariots d'entraînement (18.1, 18.2, 18.3, 18.4), avec la sonde d'essai (4).

2. Dispositif de pendule de test selon la revendication 1, une commande ou une régulation (28) étant prévue pour actionner le premier entraînement (10) et au moins un deuxième entraînement (22,26).

3. Dispositif de pendule de test selon la revendication 1 ou 2, le premier entraînement (10) et/ou au moins un deuxième entraînement (22,26) étant des entraînements linéaires.

4. Dispositif de pendule de test selon l'une quelconque des revendications précédentes, le système de câbles (6) comportant au moins quatre câbles (8.1, 8.2, 8.3, 8.4), deux câbles (8.1,8.2) étant disposés dans une première piste (20) et deux câbles (8.3,8.4) dans une deuxième piste (24), des rails d'entraînement (20,24) étant respectivement prévus pour la première piste et pour la deuxième piste.

5. Dispositif de pendule de test selon la revendication 4, le système de câbles (6) comportant au moins six câbles (8.1,8.2,8.3,8.4,8.5,8.6), au moins trois câbles (8.1,8.2,8.5) étant disposés dans une première piste (20) et au moins trois câbles (8.3,8.4,8.6) dans une deuxième piste (24), au moins deux des six câbles (8.5,8.6) étant disposés en diagonale sur la sonde d'essai (4).

6. Dispositif de pendule de test selon la revendication 4, chaque câble (8.1,8.2,8.3,8.4) comportant une suspension propre.

7. Dispositif de pendule de test selon la revendication 5, au moins deux câbles (8.1,8.5) de la première piste (20) et deux câbles (8.4,8.6) de la deuxième piste (24) étant disposés sur une suspension commune.

8. Dispositif de pendule de test selon la revendication 6 ou 7, chaque suspension disposant d'un chariot d'entraînement propre (18.1, 18.2, 18.3, 18.4).

9. Dispositif de pendule de test selon l'une quelconque des revendications précédentes, des amortisseurs (30.1,30.2) étant disposés sur les rails d'entraînement (20,24).

10. Dispositif de pendule de test selon l'une quelconque des revendications précédentes, le système de câbles (6) comportant une longueur de câble ($I_P$) qui correspond à une partie de rupture ($I_P/I_N$) de la longueur normalisée de câble ($I_N$).

11. Dispositif de pendule de test selon l'une quelconque des revendications précédentes, le système d'entraînement (10) comportant une liaison amovible (14,16) pour la sonde d'essai (4) de telle sorte que la sonde d'essai (4) peut être découplée du premier entraînement (10).

12. Procédé de fonctionnement d'un dispositif de pendule de test (2,2',2'') selon l'une quelconque des revendications précédentes, *caractérisé en ce que* la sonde d'essai (4) est accélérée au moyen du premier entraînement (10) et la suspension (18.1,18.2,18.3,18.4) est accélérée au moyen d'au moins un deuxième entraînement (22,26) à des accélérations respectivement identiques à partir d'un état de repos, la suspension (18.1,18.2,18.3,18.4) étant freinée et la sonde d'essai (4) étant découplée du premier entraînement (10) de telle sorte que la sonde d'essai (4) se balance librement.

13. Procédé selon la revendication 12, la suspension (18.1,18.2,18.3,18.4) étant déplacée après le découplage de la sonde d'essai (4) à une vitesse de

$$V_A = V_P * \left(1 - \frac{I_P}{I_N}\right).$$

14. Procédé selon la revendication 12 ou 13, le premier entraînement (10) étant déplacé après le découplage de la sonde d'essai (4) à l'opposé d'une direction d'accélération (B).

24   30.4  30.3   26   18.4   18.3

30.1  30.2   22  18.1   28

20   18.2

2   8.4   8.3

8.1   6

8.2

4   16

B   14

10   12

**Fig. 1**

102

$I_N$   106

104

**Stand der Technik**   **Fig. 2**

30.4  30.3    $v_P$    18.2

30.1  30.2   18.1

2

18.3

18.4

4

$v_P$

14

-B

_Fig. 3_

$I_N$   18.1   18.2

$v_p$

2'

20

22

$I_p$

4

14   16   12

$v_N$

10

_Fig. 4_

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2005017165 A
- US 5922937 A